(19) Europäisches Patentamt / European Patent Office / Office européen des brevets

(11) **EP 1 559 607 B1**

(12) **EUROPÄISCHE PATENTSCHRIFT**

(45) Veröffentlichungstag und Bekanntmachung des Hinweises auf die Patenterteilung:
**14.07.2010 Patentblatt 2010/28**

(51) Int Cl.:
*B60K 31/00* *(2006.01)* *B60T 7/22* *(2006.01)*

(21) Anmeldenummer: **04028088.5**

(22) Anmeldetag: **26.11.2004**

(54) **Verfahren zur Kollisions-Warnung bei einem Kraftfahrzeug**

Method for vehicle collision warning.

Système d'avertissement anticollision pour véhicules

(84) Benannte Vertragsstaaten:
**DE FR GB IT NL SE**

(30) Priorität: **31.01.2004 DE 102004004918**

(43) Veröffentlichungstag der Anmeldung:
**03.08.2005 Patentblatt 2005/31**

(73) Patentinhaber: **WABCO GmbH**
**30453 Hannover (DE)**

(72) Erfinder:
• **Kitterer, Hartmut**
**30451 Hannover (DE)**

• **Zielke, Frank**
**30890 Barsinghausen (DE)**
• **Breuer, Karsten**
**31867 Lauenau (DE)**
• **Sandkühler, Dirk**
**59368 Werne (DE)**

(74) Vertreter: **Schrödter, Manfred et al**
**WABCO GmbH**
**Postfach 91 12 62**
**30432 Hannover (DE)**

(56) Entgegenhaltungen:
EP-A- 0 484 995    DE-A- 10 015 299
DE-A- 19 510 910    DE-A- 19 817 326

**Beschreibung**

Die Erfindung bezieht sich auf ein Verfahren zur Kollisions-Warnung bei einem Kraftfahrzeug gemäß dem Oberbegriff des Patentanspruchs 1.

Heutige Straßenfahrzeuge, insbesondere auch Nutzfahrzeuge, werden zunehmend mit sogenannten Cruise Control-Systemen zur Geschwindigkeits-Konstanthaltung ausgerüstet. Diese Systeme haben die Aufgabe, auf Autobahnen oder Schnellstraßen eine konstante Reisegeschwindigkeit, die vom Fahrer vorgegeben werden kann, einzuregeln und zu halten. Diese Geschwindigkeit muss auch dann eingehalten werden, wenn das Fahrzeug eine Steigung oder ein Gefälle befährt. Hierzu ist das System in der Lage, entsprechend Gas zu geben, Gas zu vermindern oder (im Normalfall) die Dauerbremse (Retarder) des Fahrzeugs zu betätigen.

In einer weiteren Ausbaustufe des og. Systems zum ACC (Adaptive Cruise Control bzw. Abstandsregelsystem) kann dieses auch den Abstand zu vorausfahrenden Fahrzeugen erfassen und konstant halten. Hierzu ist es nötig, dass ein Sensor zur Erfassung dieses Abstandes eingebaut ist. Der Sensor kann z. B. als Radar- oder Laser-Sensor ausgebildet sein. Sobald sich der Abstand zum vorausfahrenden Fahrzeug bis auf einen vorbestimmten Sollabstand verringert hat, was durch den Abstandssensor erkannt wird, wird durch das ACC der Fahrzeugabstand auf diesen Sollwert durch Zurücknahme des Gases oder zusätzliche Betätigung auch der Betriebsbremsen eingeregelt. Der vorbestimmte Sollabstand beträgt dabei zB. für Lastkraftwagen 50m. Die Fahrzeuggeschwindigkeit kann dann unterhalb der eingestellten Reisegeschwindigkeit liegen. Beschleunigt anschließend das vorausfahrende Fahrzeug wieder, so wird wieder die eingestellte Reisegeschwindigkeit eingeregelt. Aus Sicherheits- und Komfortgründen wird durch das ACC die Betriebsbremse nur bis zu einer Fahrzeugverzögerung von etwa 2,5 m/s$^2$, also weit unterhalb der maximal möglichen Verzögerung von 6-8 m/s$^2$, betätigt.

Kritische Bedingungen liegen für ein ACC dann vor, wenn das vorausfahrende Fahrzeug plötzlich stark verzögert oder wenn ein anderes Fahrzeug aus einer benachbarten Spur plötzlich in den Sicherheitsabstand zum vorausfahrenden Fahrzeug einfährt. In diesen Fällen ist es bekannt, zur Vermeidung von Unfällen eine geeignete Warnung ("Systemgrenzenwarnung") an den Fahrer zu generieren. Dieser kann dann, wenn die oben erwähnte Bremsfunktion des ACC nicht ausreichen sollte, dieses durch eine zusätzliche Fahrerbremsung unterstützen, so dass ein ausreichender Sicherheitsabstand zum vorausfahrenden Fahrzeug eingehalten werden kann.

Der Fahrer kann aber auch unabhängig von Einschaltzustand eines ACC gewarnt werden, wenn die Gefahr eines Auffahrunfalls erkannt wird ("Kollisionswarnung").

Aus der US-PS 5,931,547 ist ein Anti-Kollisionssystem bekannt, das eine akustische Warnung für den Fahrer erzeugt, wenn eine sogenannte Kollisionszeit zu einem Hindernis vor dem eigenen Fahrzeug geringer ist als eine vorbestimmte Warnzeit. In diesem Fall wird hier automatisch die Hydraulikbremse des Fahrzeugs betätigt. Der Abstand zum vorausfahrenden Fahrzeug wird dabei mit einem Laser-Entfernungsmesser bestimmt. Eine automatische Bremsung erfolgt nur, wenn ein etwa bereits durch Fahrerbremsung bestehender Bremsdruck des Fahrzeugs unter einer festgesetzten Schwelle liegt, d. h. eine automatische Bremsung erfolgt nur dann, wenn der Fahrer nicht genug bremst.

Bei diesem bekannten System wird die Berechnung einer Kollisionszeit TTC bzw. "Time-to-Collision" nach der Formel

$$TTC = \frac{Abstand}{\Delta v} \quad,$$

durchgeführt, wobei $\Delta v$ die Differenzgeschwindigkeit zwischen den beiden Fahrzeugen darstellt. Sobald die TTC eine Schwelle unterschreitet, wird gewarnt. Diese Methode hat aber den Nachteil, dass die praktische Berechnung vor allem bei geringen Abständen und bei einer Relativgeschwindigkeit nahe Null eine sehr grosse TTC ergibt. Hierdurch wird die Situation in diesem Falle vom ACC als ungefährlich bewertet, da die TTC über der Schwelle bleibt, obwohl in Wirklichkeit eine gefährliche Situation wegen des geringen Abstands besteht.

Daneben ist die bekannte Berechnung nach der og. Formel auch bei stark dynamischen Fahrsituationen, d. h. wenn sich Abstand und Relativgeschwindigkeit der Fahrzeuge ständig stark ändern, als unzweckmässig zu betrachten.

Aus der EP 0 827 860 B1 ist weiter ein Verfahren zur Abstandsregelung für ein Fahrzeug und eine Vorrichtung zur Durchführung des Verfahrens bekannt, bei dem bei Unterschreitung eines Sollabstandes zwischen dem eigenen Fahrzeug und dem vorausfahrenden Fahrzeug eine Warnung an den Fahrer abgegeben wird. Dabei ist der Sollabstand abhängig von der Fahrgeschwindigkeit des eigenen Fahrzeugs, von der Witterung und vom Fahrstil des Fahrers. Durch das Warnsignal wird der Fahrer aufgefordert, das Fahrzeug manuell zusätzlich zur Abbremsung durch das ACC abzubremsen. Das Fahrverhalten des Fahrers bzw. sein Fahrstil wird dabei über sein bisheriges Beschleunigungs- und Bremsverhalten ermittelt.

Schließlich ist aus der US-PS 6,604,042 ein Bremskontrollsystem bekannt, bei dem eine automatische Bremsung eingeleitet werden kann, wenn das eigene Fahrzeug sich einem voraus befindlichen Objekt nähert. Das bekannte System erkennt zusätzlich, ob der Fahrer im Begriff ist, das vorausfahrende Objekt zu überholen. In diesem Fall wird eine automatische Bremsung, die vor einer eventuellen Fahrerbremsung eingeleitet wird, verhindert. Das bekannte Verfahren berechnet weiter eine Zielverzögerung des eigenen Fahrzeugs, welche nötig ist, eine Kollision mit dem vorausfahrenden Fahrzeug zu vermeiden. Die berechnete Zielverzögerung wird dann in einer Vergleichsstufe mit einem Verzögerungsschwellwert des eigenen Fahrzeugs verglichen. Eine automatische Bremsung des eigenen Fahrzeugs wird dann unter anderem eingeleitet, wenn die berechnete Zielverzögerung größer oder gleich einem vorbestimmten Schwellwert ist, und gleichzeitig weitere Bedingungen erfüllt sind.

Das bekannte Verfahren bezieht eine mögliche Zusatz-Bremsung durch den Fahrer nicht ein und berücksichtigt auch keine Fahrer-Reaktionszeit. Ein erforderlicher Restabstand zum vorausfahrenden Fahrzeug wird ebenfalls nicht berücksichtigt. Weiter wird auch kein vom Regeleingriff unabhängiges Kollisions-Warnsignal für den Fahrer generiert.

Die DE10015299A1, welche den nächstliegenden Stand der Technik darstellt, beschreibt ein Verfahren und eine Vorrichtung zur Auslösung einer Übernahmeaufforderung, die dem Fahrer eines Fahrzeuges mit einem adaptiven Fahrgeschwindigkeitsregler signalisiert, dass die Fahrsituation voraussichtlich nicht mehr von dem Fahrgeschwindigkeitsregelsystem selbst kontrolliert werden kann und der Fahrer eingreifen muss. Durch die Überwachung zweier oder mehrerer Fahrzeuggrößen, die für die Auslösung der Übernahmeaufforderung kausal sind, wird die Wahrscheinlichkeit einer Fehlalarmierung durch das adaptive Fahrgeschwindigkeitsregelsystem reduziert und die Auslösung der Übernahmeaufforderung an die momentane Fahrzeuggeschwindigkeit angepasst. Für die Auslösung der Übernahmeaufforderung müssen zwei Bedingungen erfüllt sein. Erstens wird die Größe des Beschleunigungsbedarfs verwendet. Unterschreitet diese Größe einen negativen Beschleunigungswert, der der Bremseinschalthysterese entspricht, so wird das Fahrzeug abgebremst, wobei die Bremskraft von dem betragsmäßigen Wert von dem Beschleunigungsbedarf abhängt. Damit bei kurzfristigen Fehlmessungen keine unnötige Übernahmeaufforderung ausgelöst wird, wird eine zweite Beschleunigungsgröße eingeführt. Diese zweite Größe muss eine zweite bestimmte negative Beschleunigungsschwelle unterschreiten, so dass beide Kriterien die Übernahmeaufforderung gemeinsam auslösen. Dabei wird aus Komfortgründen der maximal zulässige Beschleunigungswert sowohl durch einen positiven wie auch durch einen negativen Begrenzungswert beschränkt, sowie in der maximal zeitlichen Änderung des Beschleunigungswertesbegrenzt. Der Warnabstand setzt sich aus der Entfernung zwischen dem eigenen und dem vorausfahrenden Fahrzeug multipliziert um einen Faktor und abzüglich eines nicht näher definierten Offset-Wertes zusammen. Der Faktor wird entweder als Parameter fest vorgegeben oder aber variabel berechnet, wobei der Faktor im letzteren Fall vorzugsweise eine Funktion der eingestellten Zeitlücke während der ACC-Regelung sein kann. Mit diesem Faktor kann beispielsweise die vom Fahrer eingestellte Zeitlücke während bzw. zur ACC-Abstandsregelung oder ein vom Fahrer vorgegebenes Fahrprogramm (komfortabel, sicher, sparsam, sportlich) berücksichtigt werden. Eine vorausschauende Berücksichtigung kritischer Fahrsituationen über die Grenzen des Fahrgeschwindigkeitsregelsystems erfolgt nicht.

Der Erfindung liegt die Aufgabe zugrunde, ein Verfahren zur Kollisionswarnung bei einem Kraftfahrzeug, das mit einem Abstandssensor ausgerüstet ist, anzugeben, welches die obengenannten Nachteile nicht aufweist und in der Lage ist, ein verlässliches Warnsignal für den Fahrer zu generieren, falls voraussichtlich am Ende einer ACC-Bremsung oder nach einer Fahrer-Bremsung ein Restabstand zum vorausfahrenden Fahrzeug nicht eingehalten werden kann.

Diese Aufgabe wird durch die im Patentanspruch 1 enthaltene Erfindung gelöst. Die Unteransprüche enthalten zweckmässige Weiterbildungen.

Das erfindungsgemäße Verfahren hat den besonderen Vorteil, dass es eine Reaktionszeit des Fahrers auf das generierte Warnsignal berücksichtigt. Diese Reaktionszeit wird auch dann berücksichtigt, wenn der Fahrer bereits bremst. In diesem Fall ist die Fahrer-Reaktionszeit, also die Zeit vom normalen Bremsen bis zum benötigten stärkeren bzw. maximalen Bremsen, naturgemäß kleiner als die Reaktionszeit vom Nichtbremsen bis zum Bremsen, da im zweiten Fall der Fuß des Fahrers bereits auf dem Bremspedal steht.

Ein weiterer Vorteil des erfindungsgemäßen Verfahrens liegt darin, dass die vorgesehenen Berechnungen physikalisch korrekt und daher in jeder Situation anwendbar sind. Die Gefahr einer Fehl-Warnung ist dadurch vermindert. Alle Formeln des Kriteriums sind aufgrund ihres einfachen mathematischen Aufbaus auch mit begrenzter Rechenleistung von Mikrocontrollern mit Fixpunkt-Arithmetik problemlos realisierbar.

Die Erfindung wird im folgenden anhand einer Zeichnung näher erläutert.

Diese zeigt in

Fig. 1    eine schematische Darstellung zweier hintereinanderfahrender Fahrzeuge und in

Fig. 2    ein Diagramm einer Fahrzeug-Abbremsung zur Erläuterung der Ableitung einer bei dem erfindungsgemäßen Verfahren verwendeten Formel für die aufzubringende Fahrzeugverzögerung.

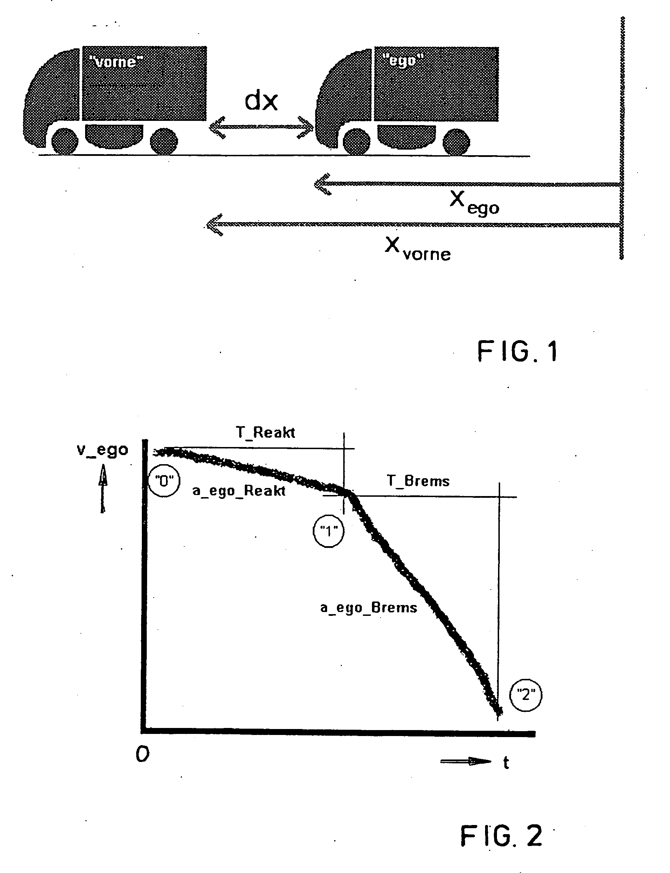

In Fig. 1 sind schematisch ein Fahrzeug "ego" und ein vorausfahrendes Fahrzeug "vorne" dargestellt. Der jeweilige Abstand zwischen den beiden Fahrzeugen beträgt dx. Die Weg-Koordinaten der beiden Fahrzeuge zu einer gedachten Null-Linie betragen xego und xvorne. Diese sind so definiert, dass xvorne - xego = dx.

Wie bereits oben erwähnt, besteht für Fahrzeuge, die einen vorausschauenden Sensor zur Umfelderfassung besitzen (zum Beispiel der Abstandssensor eines ACC-Systems), prinzipiell die Möglichkeit, eine Kollisionswarnung auszugeben. Diese Warnung kann in Form eines akustischen, optischen oder haptischen Signals erfolgen.

Mit dem erwähnten Sensor, z.B. einem Radar-Sensor, kann der Abstand und/oder die Relativgeschwindigkeit zum vorausfahrenden Fahrzeug festgestellt werden. Die Geschwindigkeit und Beschleunigung bzw. Verzögerung des eigenen Fahrzeugs können in bekannter Weise über Radsensoren ermittelt werden. Mit Hilfe des wie oben erläutert festgestellten Abstands bzw. der Relativgeschwindigkeit können damit auch die Geschwindigkeit und die Beschleunigung bzw. Verzögerung des vorausfahrenden Fahrzeugs ermittelt werden. Die genannten Daten werden für die untenstehende Ableitung einer Kollisionswarnung benötigt.

Um eine Kollisionswarnung zu realisieren, bedarf es natürlich neben der Umfelderfassungs-Sensorik auch eines Steuergerätes mit einem geeigneten Algorithmus (Software), der berechnet, ob in der momentanen Verkehrssituation eine Kollisionswarnung nötig ist oder nicht.

Generell können kritische Verkehrssituationen dadurch entstehen, dass ein langsameres Ziel plötzlich vor dem eigenen Fahrzeug auftaucht, oder dass ein vorhandenes vorausfahrendes Fahrzeug plötzlich verzögert (oder beide Probleme gleichzeitig).

Neben der Fahrer-Reaktionszeit ist es für die Formulierung von Warnkriterien hilfreich, eine etwaige Fahrzeugverzögerung während einer laufenden Abstandsregelung oder einem Fahrereingriff zu kennen. Näherungsweise kann davon ausgegangen werden, dass der Fahrer bei einem manuellen Bremseingriff mit etwa 6...8 m/s$^2$ verzögern kann, während auf dem europäischen Markt verfügbare Fahrerassistenzsysteme zur längsdynmischen Regelung normalerweise nur bis zu 2,5 m/s$^2$ aufbringen. Dieser relativ kleine Wert ist damit begründet, dass eine automatische Vollbremsung aus Sicherheits-Gründen nicht verantwortbar ist, da dann das nachfolgende Fahrzeug nicht mehr rechtzeitig abbremsen und es zu Auffahr-Unfällen kommen kann. Dies ist insbesondere auch deshalb nicht zu verantworten, da nicht vollständig auszuschliessen ist, dass der Befehl eines ACC zu einer Vollbremsung auch irrtümlich ausgegeben werden kann.

Im folgenden wird ein Kriterium für eine Kollisionswarnung, und zwar insbesondere eine Formel für eine Fahrzeug-Verzögerung a_ego_Bedarf für das nachfolgende Fahrzeug "ego" abgeleitet, welche nach Ablauf einer Fahrer-Reaktionszeit Treakt auf ein Warnsignal des ACC vom Fahrzeug aufgebracht werden muss, um einen Restabstand dxRest zum vorausfahrenden Fahrzeug einhalten zu können.

Falls die so berechnete Verzögerung a_ego_Bedarf betragsmässig oberhalb einer vom ACC realisierbaren Verzögerung liegt, was durch einen Vergleich erkannt werden kann, wird eine Systemgrenzenwarnung ausgegeben, die den Fahrer auffordert, das ACC durch zusätzliches Bremsen zu unterstützen.

Falls die so berechnete Verzögerung a_ego_Bedarf betragsmässig sogar oberhalb einer angenommenen maximal vom Fahrer zu erzeugenden Verzögerung liegt, wird, unabhängig vom ACC, eine allgemeine Kollisionswarnung generiert.

Das Kriterium, also die berechnete benötigte Verzögerung a_ego_Bedarf basiert gemäß Fig. 2 auf der Annahme, dass der Fahrer eine Reaktionszeit T_Reakt hat und nach Ablauf dieser Reaktionszeit fähig ist, das Fahrzeug mit einer Verzögerung a_ego_Brems, z.B. durch eine Vollbremsung, zu verzögern. Die Reaktionszeit T_Reakt ist ein Abstimmungsparameter des Kriteriums und situationsabhängig. So ist z.B. die Reaktionszeit kürzer anzusetzen, wenn der Fahrer eine gefährliche Situation bereits erkannt hat, und deshalb mit dem Fuß bereits auf dem Bremspedal steht.

Es wird angenommen, dass das vorausfahrende Fahrzeug über dem gesamten Berechnungsvorgang seinen momentanen Bewegungszustand fortsetzt. Die Beschleunigung a_vorne des vorderen Fahrzeugs bleibt also jeweils während eines Berechnungs-Zyklus konstant. Die Berechnung erfolgt z.B. alle 50 ms.

Das im folgenden abgeleitete Warnkriterium extrapoliert ständig in jedem Zeittakt des Warnalgorithmus die Bewegungszustände des eigenen (ego) und des vorausfahrenden (vorne) Fahrzeugs auf Basis der momentanen Bewegungszustände in die Zukunft und berechnet damit eine Verzögerung a_ego_Bedarf, die nach Ablauf der o.a. Reaktionszeit T_Reakt aufgebracht werden muss, um einen Aufprall auf das Vorderfahrzeug zu vermeiden, dh., einen Restabstand dxRest einzuhalten.

Sollte der so berechnete Wert für a_ego_Bedarf betragsmässig noch oberhalb der vom Fahrer unter normalen Bedingungen aufbringbaren Fahrzeug-Verzögerung liegen, muss vom ACC zusätzlich zur oben erwähnten Systemgrenzenwarnung eine allgemeine Fahrer-Kollisionswarnung generiert werden.

Folgende Berechnungen liegen dem Kriterium im Detail zu Grunde:

In jedem Zeittakt bzw. Zyklus wird das Kriterium neu berechnet. Der momentane Zeitpunkt ("0") entspricht immer dem zeitlichen Anfang des in der Fig. 2 dargestellten Diagramms.

Es wird angenommen, dass das eigene Fahrzeug ("ego") in Zukunft die aktuelle Verzögerung bis zum Ablauf der Reaktionszeit "T_Reakt" (Zeitpunkt "1") aufrecht erhält. Am Ende der Reaktionszeit lässt sich der Bewegungszustand des eigenen Fahrzeugs und des Vorderfahrzeugs wie folgt berechnen:

Allgemeine Zusammenhänge gemäß Fig.1:

$$\text{Abstand: } dx = x_{vorne} - x_{ego}$$

$$\text{Relativgeschwindigkeit: } dv = v_{vorne} - v_{ego}$$

Zunächst werden die allgemeinen Gleichungen der Relativbewegung der beiden Fahrzeuge in Abhängigkeit von der Zeit (t) aufgestellt. Die folgende Berechnung von Abstand dx(t) und Relativgeschwindigkeit dv(t) gilt während der Reaktionszeit (0 < t < T_Reakt), also zwischen den Zeitpunkten "0" und "1" der Fig. 2:

$$dx(t) = dx_0 + \left(v_{vorne\_0} - v_{ego\_0}\right) \cdot t + \tfrac{1}{2} \cdot \left(a_{vorne\_0} - a_{ego\_Reakt}\right) \cdot t^2$$

$$dv(t) = \left(v_{vorne\_0} - v_{ego\_0}\right) + \left(a_{vorne\_0} - a_{ego\_Reakt}\right) \cdot t$$

Darin gilt:

dxo =   Abstand zum Zeitpunkt Null
v_o =   Geschwindigkeiten im Zeitpunkt Null
a_o =   Verzögerungen im Zeitpunkt Null
aego_Reakt =   eigene (konstante) Verzögerung zwischen den Zeitpunkten "0" und "1".

Setzt man, als Spezialfall der obigen Formeln, t = T_Reakt, befindet sich also in der Vorausberechnung am Ende der Reaktionszeit (Zeitpunkt "1"), so erhält man:

$$dx_1 = dx_0 + \left(v_{vorne\_0} - v_{ego\_0}\right) \cdot T_{Reakt} + \tfrac{1}{2} \cdot \left(a_{vorne\_0} - a_{ego\_Reakt}\right) \cdot T_{Reakt}^2$$

$$dv_1 = \left(v_{vorne\_0} - v_{ego\_0}\right) + \left(a_{vorne\_0} - a_{ego\_Reakt}\right) \cdot T_{Reakt}$$

Nach Ablauf der Reaktionszeit T_Reakt soll nun diejenige Verzögerung a_ego_Bedarf des eigenen Fahrzeugs berechnet werden, die ausreicht, um einen Aufprall auf das Vorderfahrzeug zu vermeiden und einen geringen Restabstand dx_rest (beispielsweise 5 Meter) zu garantieren.

Für den dann folgenden Zeitraum werden zunächst die allgemeinen Formeln für die Fahrzeug-Bewegung, also für den Abstand dx(t) und für die Differenzgeschwindigkeit dv(t) aufgestellt, und zwar für (T_Reakt < t < T_Brems:), also für den Zeitraum zwischen "1" und "2" in der Fig. 2 :

$$dx(t) = dx_1 + \left(dv_1\right) \cdot t + \tfrac{1}{2} \cdot \left(a_{vorne\_0} - a_{ego\_Bedarf}\right) \cdot t^2$$

$$dv(t) = (dv_1) + (a_{vorne\_0} - a_{ego\_Bedarf}) \cdot t$$

mit

dx1, dv1 =       Abstand bzw. Relativgeschwindigkeit im Zeitpunkt "1",
aego_Bedarf =     (konstante) Verzögerung des eigenen Fahrzeugs zwischen den Zeitpunkten "1" und "2".

Setzt man t = T_Brems, befindet sich also in der Vorausberechnung zeitlich am Ende des Brems-Manövers (Zeitpunkt "2"), so erhält man:

$$dx_{T\_Brems} = dx(t = T\_Brems)$$
$$= dx_1 + (dv_1) \cdot T_{Brems} + \tfrac{1}{2} \cdot (a_{vorne\_0} - a_{ego\_Bedarf}) \cdot T_{Brems}^2$$

$$dv_{T\_Brems} = dv(t = T\_Brems) = (dv_1) + (a_{vorne\_0} - a_{ego\_Bedarf}) \cdot T_{Brems}$$

Als zusätzliche Information wird nun in die Vorausberechnung eingebracht, dass bei Erreichen des Restabstandes (Zeitpunkt "2") der Restabstand dx(t) zwischen den beiden Fahrzeugen dxRest sein soll und die Relativgeschwindigkeit dv(t) vollständig abgebaut, d.h. Null sein soll. Damit ergibt sich:

$$dx_{T\_Brems} = dx(t = T\_Brems) = dx_{rest}$$

$$dv_{T\_Brems} = dv(t = T\_Brems) = 0$$

Löst man die Gleichung dv(t = T_Brems) = 0 nach T_Brems auf und setzt das Ergebnis in die Gleichung von dx(t = T_Brems) ein, so kann der folgende Zusammenhang gefunden werden:

$$a\_ego\_bedarf = -\frac{dv_1^2}{2 \cdot (dx_1 - dx_{rest})} + a_{vorne\_0}$$

Alle Elemente dieser Gleichung sind bekannt. Die Werte zum Zeitpunkt "1", also $dx_1$ und $dv_1$, sind bereits oben errechnet worden. Die angegebene Gleichung gibt also direkt die aus der aktuellen kinematischen Situation resultierende zur Vermeidung eines Aufpralls nötige Verzögerung (bzw. gegebenenfalls Beschleunigung) des eigenen Fahrzeugs nach Ablauf einer system- oder fahrerspezifischen Reaktionszeit an.
Der Wert dxRest, also der Restabstand zum vorausfahrenden Fahrzeug am Ende der Bremsung, wird zweckmässig auf einen Wert zwischen 0 und 30 m gesetzt.
Zur Generierung einer Systemgrenzenwarnung und einer Fahrer-Kollisionswarnung (s. Seite 11), werden mit der oben angeführten Formel für a_ego_Bedarf gleichzeitig zwei unterschiedliche Fälle berechnet.
Für eine Systemgrenzenwarnung wird dazu die Reaktionszeit T_reakt zu Null angenommen und a_ego_Bedarf (T_reakt=0) berechnet. Der so errechnete Wert wird dann, wie oben erwähnt, mit einer vorbestimmten Verzögerung verglichen, die das ACC automatisch generieren kann. Ist zum Erzielen der Bedarfsverzögerung a_ego_Bedarf(T_reakt=0) eine höhere Abbremsung erforderlich, als sie das ACC realisieren kann, wird eine Systemgrenzenwarnung ausgegeben, die den Fahrer auffordert, geeignet stärkerer zu bremsen.

Für eine Fahrer-Kollisionswarnung wird die oben angeführte Formel von a_ego_Bedarf mit einer Reaktionszeit T_reakt ungleich Null (also einer realistischen Fahrerreaktionszeit) berechnet. T_reakt wird zweckmäßig auf einen Wert zwischen 0,5 und 3 sec gesetzt, falls der Fahrer zum Berechnungszeitpunkt noch nicht die Bremse betätigt. Die Berechnung ist aber auch für den Spezialfall gültig, dass der Fahrer zum Berechnungszeitpunkt bereits aktiv bremst. Auch dann kann (angenähert) die Ist-Verzögerung zwischen den Punkten "0" und "1" (gemäß Fig. 2) als a_ego_Reakt eingesetzt werden. In diesem Fall ist aber aufgrund der bereits erfolgten Objektfixierung und Situationsidentifikation durch den Fahrer von einer kürzeren Reaktionszeit T_Reakt als im Normalfall auszugehen. Eine verkürzte Reaktionszeit ergibt sich auch dadurch, dass in diesem Fall der Fuss des Fahrers bereits auf dem Bremspedal steht. T_reakt wird daher zweckmässig auf einen Wert zwischen 0,1 und 2 sec gesetzt.

Falls zum Erreichen des so berechneten Wertes a_ego_Bedarf(T_Reakt>0) eine größere Verzögerung des Fahrzeugs erforderlich ist, als sie der Fahrer bei seiner angenommenen maximalen Abbremsung aufbringen könnte, wird eine Kollisionswarnung ausgegeben. Diese War-nung erfolgt unabhängig davon, ob ACC verwendet wird oder nicht. Setzt der Fahrer zum Warnzeitpunkt seine angenommene maximale Verzögerung des Fahrzeugs um, liegt der tatsächliche Restabstand innerhalb des oben angeführten Abstandes dxRest. Falls ein Ausweichen noch möglich sein sollte, kann sich der Fahrer gleichzeitig auch darauf einstellen, dass er das vorausfahrende Fahrzeug bzw. ein Hindernis zweckmässig umfahren sollte, um eine Kollision zu vermeiden.

Das Kriterium kann nicht korrekt angewendet werden, wenn das Vorderfahrzeug schneller als das eigene Fahrzeug ist. In diesem Fall ist aber auch keine Kollision infolge von Geschwindigkeitsänderungen zu befürchten, sofern die Abstände nicht zu klein sind.

Erreicht das Vorderfahrzeug im Berechnungszeitraum den Stillstand, muss die Berechnung entsprechend erweitert werden, um Fehler zu vermeiden. Dazu muss mit dem aktuellen Bewegungszustand des Vorderfahrzeugs (Beschleunigung und Geschwindigkeit) die Zeitspanne bis zum Erreichen des Stillstands berechnet werden. Ab diesem Zeitpunkt darf der verbleibende Abstand zwischen den Fahrzeugen und die Relativgeschwindigkeit nur noch aufgrund der Bewegung des eigenen Fahrzeugs berechnet werden. Da die einfachere Algorithmik, wie sie oben beschrieben ist, mit ihren Ergebnissen aber auf der sicheren Seite liegt, d.h. den Fahrer eher zu früh warnt, kann die Erweiterung der Berechnung u.U. zur Optimierung der Rechenzeit auf einem Mikrocontroller vernachlässigt werden.

Die beschriebene Kollisionswarnung und/oder Systemgrenzenwarnung kann zweckmässig auch dazu benutzt werden, um gleichzeitig einen automatischen Bremsvorgang mit der Betriebsbremse des Fahrzeugs einzuleiten. Dies hat den Vorteil, dass die Bremsung dann im allgemeinen besonders schnell erfolgt, da die Reaktionszeit des Fahrers eingespart wird. Ausserdem wird auch sofort mit der nötigen hohen Intensität gebremst. Vorraussetzung für eine derartige automatische Bremsung ist natürlich, dass das Fahrzeug mit einem ACC und mit einem elektronisch ansteuerbaren Bremssystem ausgerüstet ist. Durch derartige Systeme kann die Betriebsbremse unabhängig vom Fahrer angesteuert werden.

Wie oben bereits erwähnt, wird die Verzögerung dieser automatischen Bremsung zweckmässig auf einen Wert weit unterhalb der maximal möglichen Verzögerung begrenzt. Hierdurch sollen Auffahrunfälle der nachfolgenden Fahrzeuge, insbesondere bei einer möglichen Fehl-Warnung, verhindert werden. Die Entscheidung zu einer maximalen Bremsung bleibt also dem Fahrer vorbehalten.

Die Systemgrenzenwarnung und/oder die Kollisionswarnung kann zweckmässig akustisch, und/oder optisch, und/oder haptisch erfolgen.

Alle Formeln des einfachen wie auch des erweiterten Kriteriums sind, wie oben bereits erwähnt, auch mit begrenzter Rechenleistung in Mikrocontrollern mit Fixpunktarithmetik realisierbar (kein Wurzelziehen, kein Lösen von Gleichungssystemen). Hierdurch ist das erfindungsgemässe Verfahren kostengünstig realisierbar, und kann gegebenenfalls sogar von bereits vorhandenen Mikrocontrollern mit übernommen werden.

**Patentansprüche**

1. Verfahren zur Kollisions-Warnung bei einem Kraftfahrzeug, das mit einer Messeinrichtung zumindest zur Erfassung des Abstandes dx zum vorausfahrenden Fahrzeug versehen ist, wobei das Abstandssignal einer Auswerteeinrichtung zugeführt wird,
   **gekennzeichnet durch** folgende Merkmale:

   a) in der Auswerteeinrichtung wird ständig diejenige Fahrzeug-Verzögerung a_ego_Bedarf berechnet, die nach Ablauf einer Fahrer-Reaktionszeit $T_{Reakt}$ vom Fahrzeug aufgebracht werden muß, um einen Restabstand $dx_{Rest}$ zum vorausfahrenden Fahrzeug einhalten zu können;
   b) falls die berechnete Verzögerung a_ego_Bedarf betragsmässig oberhalb einer angenommenen, **durch** eine Fahrerbremsung erzeugbaren Fahrzeug-Verzögerung liegt, wird ein Kollisions- Warnsignal ausgegeben.

c. falls die mit einer Fahrer-Reaktionszeit T_Reakt = 0 berechnete Fahrzeug-Verzögerung a_ego_Bedarf betragsmässig oberhalb einer vom ACC realisierbaren Fahrzeug-Verzögerung liegt und das Fahrzeug mit einem Adaptive Cruise Control (ACC) ausgerüstet ist, wird eine Systemgrenzenwarnung ausgegeben;
d. die Fahrzeug-Verzögerung a_ego_Bedarf wird berechnet nach der Formel

$$a\_ego\_bedarf = -\frac{dv_1^2}{2 \cdot (dx_1 - dx_{rest})} + a_{vorne\_0}$$

mit

dv1 = Relativgeschwindigkeit zwischen den beiden Fahrzeugen am Ende der Reakti- onszeit
dx1 = Abstand der beiden Fahrzeuge am Ende der Reaktionszeit
dxRest = vorgegebener Restabstand zum vor- rausfahrenden Fahrzeug am Ende der Bremsung
avorne_o = aktuelle Verzögerung des voraus- fahrenden Fahrzeugs

2. Verfahren nach Anspruch 1, **dadurch gekennzeichnet, dass** der Restabstand dxRest auf einen Wert zwischen 0 und 30 m gesetzt wird.

3. Verfahren nach einem oder mehreren der Ansprüche 1 bis 2, **dadurch gekennzeichnet, dass** die Fahrer-Reaktionszeit $T_{Reaxt}$ auf einen Wert zwischen 0,5 und 3 sec gesetzt wird, wenn der Fahrer noch nicht bremst.

4. Verfahren nach einem oder mehreren der Ansprüche 1 bis 2, **dadurch gekennzeichnet, dass** die Fahrer-Reaktionszeit $T_{Reaxt}$ auf einen Wert zwischen 0,1 und 2 sec gesetzt wird, wenn der Fahrer bereits bremst.

5. Verfahren nach einem oder mehreren der Ansprüche 1 bis 4, **dadurch gekennzeichnet, dass** die Systemgrenzenwarnung und/oder die Kollisionswarnung dazu benutzt wird, eine automatische Bremsung des Fahrzeugs einzuleiten.

6. Verfahren nach Anspruch 5, **dadurch gekennzeichnet, dass** die Verzögerung der automatischen Bremsung auf einen Wert unterhalb der maximal möglichen Verzögerung des Fahrzeugs begrenzt wird.

7. Verfahren nach einem oder mehreren der Ansprüche 1 bis 6, **dadurch gekennzeichnet, dass** die Systemgrenzenwarnung und/oder die Kollisionswarnung akustisch, und/oder optisch, und/oder haptisch erfolgt.

**Claims**

1. Method for warning of collisions in a motor vehicle which is provided with a measuring device at least for sensing the distance dx from the vehicle travelling in front, wherein the distance signal is fed to an evaluation device, **characterized by** the following features:

a) the evaluation device continuously calculates the vehicle deceleration a_ego_demand which has to be applied by the vehicle after the expiry of a driver reaction time $T_{react}$ in order to be able to maintain a residual distance $dx_{res}$ from the vehicle travelling in front;
b) if the calculated deceleration a_ego_demand is, in absolute terms, above an assumed vehicle deceleration which can be generated by braking by the driver, a collision warning signal is output;
c) if the vehicle deceleration a_ego_demand which is calculated with a driver reaction time T_react=O is, in absolute terms, above a vehicle deceleration which can be influenced by the ACC and the vehicle is equipped with an adaptive cruise controller (ACC), a system limit warning is output;
d) the vehicle deceleration a_ego_demand is calculated according to the formula:

$$a\_ego\_demand = -\frac{dv_1^2}{2 \cdot (dx_1 - dx_{res})} + a_{front\_o}$$

where

$dv_1$ = relative speed between the two vehicles at the end of the reaction time
$dx_1$ = distance between the two vehicles at the end of the reaction time
$dx_{res}$ = predefined residual distance from the vehicle travelling in front at the end of the braking operation
$a_{front\_o}$ = current deceleration of the vehicle travelling in front.

**2.** Method according to Claim 1, **characterized** **in that** the residual distance dxRes is set to a value between 0 and 30 m.

**3.** Method according to one or more of Claims 1 to 2, **characterized** **in that** the driver reaction time $T_{react}$ is set to a value between 0.5 and 3 sec if the driver is still not braking.

**4.** Method according to one of Claims 1 to 2, **characterized** **in that** the driver reaction time $T_{react}$ is set to a value between 0.1 and 2 sec if the driver is already braking.

**5.** Method according to one or more of Claims 1 to 4, **characterized** **in that** the system limit warning and/or the collision warning is used to initiate automatic braking of the vehicle.

**6.** Method according to Claim 5, **characterized** **in that** the deceleration of the automatic braking operation is limited to a value below the maximum possible deceleration of the vehicle.

**7.** Method according to one or more of Claims 1 to 6, **characterized** **in that** the system limit warning and/or the collision warning is/are issued acoustically and/or optically and/or haptically.

**Revendications**

**1.** Procédé d'avertissement anticollision de véhicule automobile pourvu d'un dispositif de mesure permettant au moins de détecter l'espacement dx par rapport au véhicule précédent, le signal d'espacement étant envoyé à un dispositif d'analyse ;
**caractérisé par** les caractéristiques suivantes :

a) le ralentissement du véhicule a_ego_Bedarf est calculé en permanence dans le dispositif d'analyse, ledit ralentissement devant être appliqué au véhicule après écoulement d'un temps de réaction du conducteur $T_{Reakt}$ pour pouvoir conserver un espacement restant $dx_{Rest}$ par rapport au véhicule précédent ;
b) si le ralentissement a_ego_Bedarf calculé est supérieur à un ralentissement du véhicule supposé engendré par un freinage du conducteur, un signal d'avertissement anticollision est émis ;
c) si le ralentissement du véhicule a_ego_Bedarf calculé après un temps de réaction du conducteur T_Reakt = 0 est supérieur à un ralentissement du véhicule réalisable avec le régulateur ACC et que le véhicule est équipé d'un tel régulateur de vitesse et d'espacement (Adaptive Cruise Control en anglais, ACC), un avertissement de limite de système est envoyé ;
d) le ralentissement du véhicule a_ego_Bedarf est calculé selon la formule :

$$a\_ego\_bedarf = -\frac{dv_1^2}{2 \cdot (dx_1 - dx_{rest})} + a_{vorne\_0}$$

avec :

dv1 = vitesse relative entre les deux véhicules à la fin du temps de réaction ;
dx1 = espacement entre les deux véhicules à la fin du temps de réaction ;
dxRest = espacement restant préalablement prévu à la fin du freinage par rapport au véhicule précédent ;
avorne_o = ralentissement réel du véhicule précédent.

**2.** Procédé selon la revendication 1, **caractérisé en ce que** l'espacement restant dxRest est fixé à une valeur située entre 0 et 30 m.

**3.** Procédé selon l'une quelconque des revendications 1 à 2 ou plusieurs d'entre elles, **caractérisé en ce que** le temps de réaction du conducteur $T_{Reakt}$ est fixé à une valeur située entre 0,5 et 3 secondes lorsque le conducteur n'a pas encore commencé à freiner.

**4.** Procédé selon l'une .quelconque des revendications 1 à 2 ou plusieurs d'entre elles, **caractérisé en ce que** le temps de réaction du conducteur $T_{Reakt}$ est fixé à une valeur située entre 0,1 et 2 secondes lorsque le conducteur a commencé à freiner.

**5.** Procédé selon l'une quelconque des revendications 1 à 4 ou plusieurs d'entre elles, **caractérisé en ce que** l'avertissement de limite de système et/ou l'avertissement anticollision sont utilisés pour initier un freinage automatique du véhicule.

**6.** Procédé selon la revendication 5, **caractérisé en ce que** le ralentissement provoqué par le freinage automatique est limité à une valeur située en dessous du ralentissement maximal possible du véhicule.

**7.** Procédé selon l'une quelconque des revendications 1 à 6 ou plusieurs d'entre elles, **caractérisé en ce que** l'avertissement de limite de système et/ou l'avertissement anticollision se produit de façon acoustique, et/ou optique, et/ou tactile.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5931547 A
- EP 0827860 B1
- US 6604042 B
- DE 10015299 A1